# EUROPEAN PATENT APPLICATION

(11) **EP 0 737 930 A1**
(43) Date of publication of application: **16.10.1996**
(21) Application number: 96302574.7
(22) Date of filing: 12.04.1996
(51) Int. Cl.: G06F 17/30

(54) **Method and system for comicstrip representation of multimedia presentations**

(30) Priority: 12.04.1995 US 420928
(71) Applicant: SUN MICROSYSTEMS, INC., Mountain View, CA 94043 (US)
(72) Inventor: Nielsen, Jakob, Los Altos, California 94022 (US)
(74) Representative: W.P. Thompson & Co.

(57) **Abstract**

The present invention provides a method and process for an Internet WWW user to rapidly display on her browser, a high quality comicstrip type summary representation of a much larger multimedia work, which work would normally require significant time and network bandwidth to transmit to the user, wherein the comicstrip summary includes an audio portion of the work related to the scenes selected for the comicstrip display and optionally a text summary of the story plot.

## Description

The present invention relates to a method and system for comicstrip representation of multimedia presentations.

More particularly the present invention relates to the field of information retrieval. More specifically, the present invention relates to a client/server model for providing a client on a network with a comicstrip type summary of a much larger multimedia work which would ordinarily require significant time and bandwidth to transmit to the client.

Computer-to-computer communication networks are becoming larger and larger and message traffic on these networks is increasing exponentially. Moreover, technology companies are emphasizing a new channel - the Internet- for the distribution of goods, services and intellectual property. It is desirable therefore that message transmission on these networks be made as efficient as possible.

The development of computerized information resources, such as the Internet, and various on-line services, such as Compuserve, America On-Line, Prodigy, and other services, has led to a proliferation of electronically-available information. In fact, this electronic information is increasingly displacing more conventional means of information transmission, such as newspapers, magazines, and even television and the movies. The primary issue in all of these resources is a combination of rapid transmission of the desired information so as not to waste the user's time waiting for a transmission to complete, and how to select only the desired information for transmission so as not to transmit unnecessary data which takes unnecessary transmission time (and related cost) and uses an unnecessary amount of the available network bandwidth. It is desirable that there exist a process for allowing a user on the Internet to rapidly display a representation or summary of a multimedia work without having to download the entire work.

For example, in the case of multimedia works encompassing video and audio, the digitized video portion of these works requires a great deal of computer memory and a corresponding large amount of transmission system bandwidth. One frame of a standard video film requires approximately 900 kilobytes of computer memory locations for storage, and an 8 minute video film, for example, requires 12 gigabytes of storage. Of course data compression schemes of various kinds are used for reducing the amount of storage required, for example, one common method would reduce the 8 minute video to 192 megabytes. Similarly, one frame of a compressed video would take approximately 2 minutes to transmit across the United States, and the entire 8 minute video would take approximately 27 hours using normal modem speeds. Accordingly, when a user is trying to access information about available multimedia works on a remote server using the client/server functionality provided by the World Wide Web ("WWW") and a well known browser, she is typically unwilling to sit and wait for more than a minute or two for the work to be downloaded to her system for viewing, especially if she is not sure that she is interested in the work in the first place.

In the past, attempts have been made to compress the video portions of such multimedia works in order to decrease the transmission bandwidth required as well as the transmission time. Unfortunately these compression schemes as yet are only able to produce playback images of such poor quality as to be unrepresentative of the quality of the original video, and to reduce transmission time by a factor of two so that a work that would take 30 minutes to transmit will still take 15 minutes, which is still too long for a typical WWW user to wait. Thus for example if the particular system were seeking to facilitate the purchase or rental of a multimedia work, the compressed version's poor quality and still lengthy download time would seriously impede the purchase/rental decision. One such attempt to use compression for such displays was to ... (discuss closest Prior art in more detail)

Another earlier case in which people have attempted to offer multimedia works for sale/rental was merely to download a television listing, including available movies for viewing to a subscriber's television receiver (see U.S. Patent No. 4,706,121). Such listings are easily displayed on a browser on the WWW as well, however listings of events are not as effective as viewing a comics trip type summary of the work especially if it has accompanying audio.

The present invention provides a method and process for an Internet WWW user to display on her browser, a high quality comicstrip type representation of a multimedia work which includes the audio portion of the work related to the scenes selected for the comics trip display as well as some limited text for describing plot summary, etc.

### SUMMARY OF THE INVENTION

The present invention overcomes the disadvantages of the above described systems by providing an economical, high performance, adaptable system and method for creating a comicstrip type summary of a larger multimedia work, with accompanying audio related to the summary strip of images, which can minimize user wait time and related transmission time and cost when attempting to view the summary on a World Wide Web ("WWW") browser. The present invention is a computer controlled process and system for creating a digitized comicstrip representing a multimedia work, wherein a file of selected audio can be attached to the comicstrip, and wherein both the comicstrip image file and the related audio file are optimized to reduce transmission time on the WWW without sacrificing image or audio quality.

In one aspect of the present invention a computer system is disclosed for use in providing a client on a network with a comicstrip summary of a much larger multimedia work, which multimedia work would require a significant time and network bandwidth to transmit to the client if it were transmitted in its entirety, the computer system including a server capable of receiving and storing a digitized version of a multimedia work, an image selection mechanism configured to select a group of images from the multimedia work, and a comicstrip processor which can form a comicstrip file from the group of images selected and which can be transmitted over the network to the client in a commercially acceptable amount of time. There is additionally disclosed an audio selection mechanism with which- to select a segment of audio from the multimedia work to create a subset of the work's audio file and to attach the subset file to the comicstrip file.

In another aspect of the invention, a computer implemented comics trip creation mechanism is disclosed, for use in providing a client on a network with a comicstrip summary of a much larger multimedia work, which multimedia work would require a significant time and network bandwidth to transmit to the client if it were transmitted in its entirety, having an image selection mechanism, a comics trip processor and an audio selection mechanism.

In still another aspect of the invention, a method is disclosed for constructing a comicstrip of images from a multimedia work by providing devices to use in digitizing the work, selecting a set of images from the work to represent the work in summary form and in creating a comicstrip out of the selected images for rapid transmission to a user.

In still another aspect of the invention, a method is disclosed of providing a client on a network with a comicstrip summary of a much larger multimedia work wherein the comicstrip summary has an audio file related to the comics trip summary and wherein the comicstrip summary and related audio file can be transmitted to the client in a fraction of the time and using a fraction of the bandwidth required by the larger multimedia work by, selecting a set of images from the work to represent the work in summary form, limiting the use of colors in the colormap representing the color in the pixels of the images selected and creating a comics trip out of the selected images for rapid transmission to a user.

The present invention will now be further described, by way of example, with reference to the accompanying drawings, in which: -
**Figure 1** illustrates a client/server system in which an embodiment of the present invention may be implemented.
**Figure 2** illustrates a more detailed view of the client/server shown in Figure 1.
**Figure 3** illustrates the structure of a workstation in which the client or server may be operative.
**Figure 4** illustrates the concept of a movie/video comicstrip.
**Figure 5** illustrates a typical movie/video/multimedia digitization process.
**Figure 6** is a flow chart of the process of creating a comicstrip file with the related audio file.
**Figure 7** illustrates a view of the processes operative in a server supporting a multimedia work order or display comicstrip process.
**Figure 8** is a flow chart of the user procedure for accessing the related browser, selecting a comicstrip summary, playing the related audio and possibly ordering the work.
**Figure 9** illustrates an exemplary comicstrip type display with accompanying plot summary.
**Figure 10** illustrates a typical HTML script used to attach the related audio file to a comics trip summary and to attach the related plot summary to the comics trip display.
**Figure 11** illustrates an exemplary browser display window showing an exemplary descriptive ad for a film with hypertext links to other pages.
**Figure 12** illustrates an exemplary browser display window for a page of additional scenes for the film of **Fig. 11** which was made to appear by clicking on a hypertext pointer on the previous window. This window also contains hypertext pointers to other pages, including one to "a "comic book" with still photos and the sound track"
**Figure 13** illustrates an exemplary browser display window was made to appear by clicking on the hypertext pointer on the previous window which pointer to the "comic book". This window contains an exemplary "comics trip", plot text and a hypertext pointer to the "soundtrack" associated with the comicstrip.
**Figure 14** illustrates an exemplary browser display window showing again the window containing the comicstrip of **Fig. 13** but also displaying an audiotool window which accompanies the playing of the soundtrack related to the comicstrip.

### NOTATIONS AND NOMENCLATURE

The detailed descriptions which follow are presented largely in terms of algorithms and symbolic representations of operations on data bits within a computer memory. These algorithmic descriptions and representations are the means used by those skilled in the data processing arts to most effectively convey the substance of their work to others skilled in the art.

An algorithm is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be bourne in mind, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operations of the present invention include general purpose digital computers or similar devices. In all cases there should be bourne in mind the distinction between the method operations in operating a computer and the method of computation itself. The present invention relates to method steps for operating a computer in processing electrical or other (e.g., mechanical, chemical) physical signals to generate other desired physical signals.

The present invention also relates to apparatus for performing these operations. This apparatus may be specially constructed for the required purposes or it may comprise a general purpose computer as selectively activated or reconfigured by a computer program stored in the computer. The algorithms presented herein are not inherently related to a particular computer or other apparatus. In particular, various general purpose machines may be used with programs written in accordance with the teachings herein, or it may prove more convenient to construct more specialized apparatus to perform the required method steps. The required structure for a variety of these machines will appear from the description given.

### DESCRIPTION OF THE PREFERRED EMBODIMENT

The present invention provides a method and process for an Internet WWW user to rapidly display on her browser, a high quality comicstrip type summary representation of a much larger multimedia work which work would normally require significant time and network bandwidth to transmit to the user, wherein the comicstrip summary includes an audio portion of the work related to the scenes selected for the comicstrip display and optionally a text summary of the story plot.

Although the following will be described with reference to certain particular embodiments, including data structures, flow of steps, hardware configurations, etc, it will be apparent to one skilled in the art that implementations of the present invention can be practiced without these specific details.

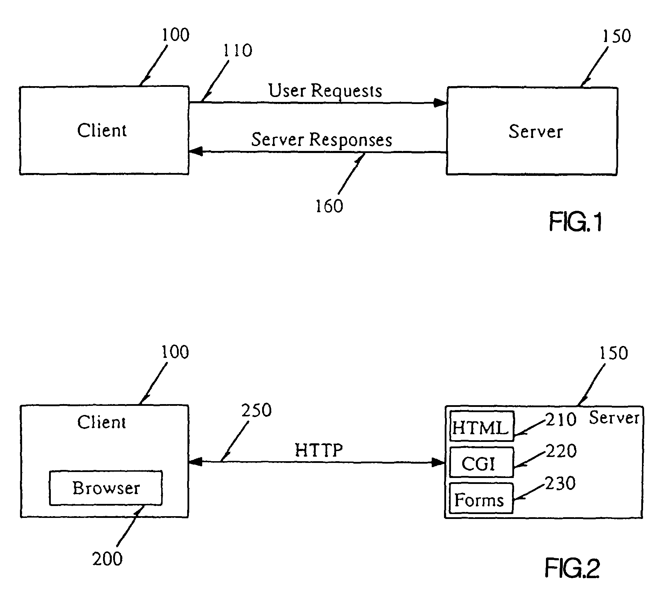

Implementations of the present invention use a client/server architecture, as illustrated in Figure 1, wherein user requests 110 for information are sent by a client application program 100 to a server 150 (typically, a remote computer system accessible over the Internet or other communication medium). The server 150, as will be described in more detail below, performs scanning and searching of multimedia information sources (e.g. libraries of movies, vidoes, musicals, etc.), based upon these user requests, presents the filtered electronic information ( i.e. comicstrip summaries with related audio) as server responses 160 to the client process. The client process may be active in a first computer system, and the server process may be active in a second computer system, and communicate with one another over a communication medium, thus providing distributed functionality and allowing multiple clients to take advantage of the information gathering capabilities of the server.

A more detailed view of the client and server are shown in Figure 2. Although the client and server are processes which are operative within two computer systems, these processes being generated from a high level programming language (e.g. C or C++), compiled and executed in a computer system (e.g. a workstation), it can be appreciated by one skilled in the art that they may be implemented in a variety of hardware devices, either programmed or dedicated.

Client 100 and server 150 communicate using the functionally provided by the World-Wide Web (WWW). Clients and servers of the WWW communicate over a communication medium 250 using a standard known as the Hypertext Transfer Protocol (HTTP). In some embodiments, the client and server may be coupled via Serial Line Internet Protocol (SLIP) or TCP/IP connections for high- capacity communication. Active within the client is a first process, known as a "browser" 200, which establishes the connection with server 150, and presents information to the user. Any number of commercially or publicly-available browsers may be used, in various implementations, however in this implementation, browser 200 is the Netscape Navigator brand browser, available from Netscape Communications Corporation, Mountain View, California. Other browsers such as the Mosaic browser (version 2.0 or greater) available from the National Center for Supercomputing Applications (NCSA) in Urbana-Champaign, Illinois, Netcruiser, or others, which are available and provide the functionality specified under the HTTP protocol and the Netscape brand browser or above may be used.

The server 150 executes the corresponding server software which presents information to the client in the form of HTTP responses. The HTTP responses correspond with the web "pages" represented using Hypertext Markup Language (HTML), or other data which is generated by the server, as will now be discussed.

A shortcoming of HTTP is that it is a stateless protocol. The Web "page" from which user transactions may be performed in the server under control of the client is not recalled from client-session to client-session. As a result, functionality to effect transmission efficiencies requires an underlying mechanism which is unmet by current versions of HTTP. Under the Netscape Navigator, in addition to HTML functionality 210 provided by the server (display and retrieval of certain textual and other data based upon Hypertext views and selection of item(s)), a Common Gateway Interface (CGI) 220 is provided which allows the client program to direct the server to commence execution of a specified program contained within the server. Using this interface, and HTTP, the server may notify the client of the results of that execution upon completion. The server's application program, the multimedia work comicstrip summary generator, maintains a file of the selected comicstrip frames and related audio, and thus, provides state functionality from session to session to an otherwise stateless protocol.

In alternate embodiments, it may be desirable to permit a user to specify some order of viewing or some limit in the amount of transmission time that the user is willing to permit for such a download action. In such a case, in order to control the parameters of the execution of this server-resident process, the client may direct the filling out- of certain "forms" from his browser. This is also provided by the "fill-in forms" functionality 230 available under the Netscape Navigator or Mosaic browsers, which allows the user via his client application program 100, to specify a "profile" in which the server will cause an application program to function (e.g. the types of stories/articles which are of interest to the user, the transmission times permitted, etc.). The details of a user profile will be not be discussed herein however those skilled in the art will readily understand how to use the "forms" capability to create such functionality.

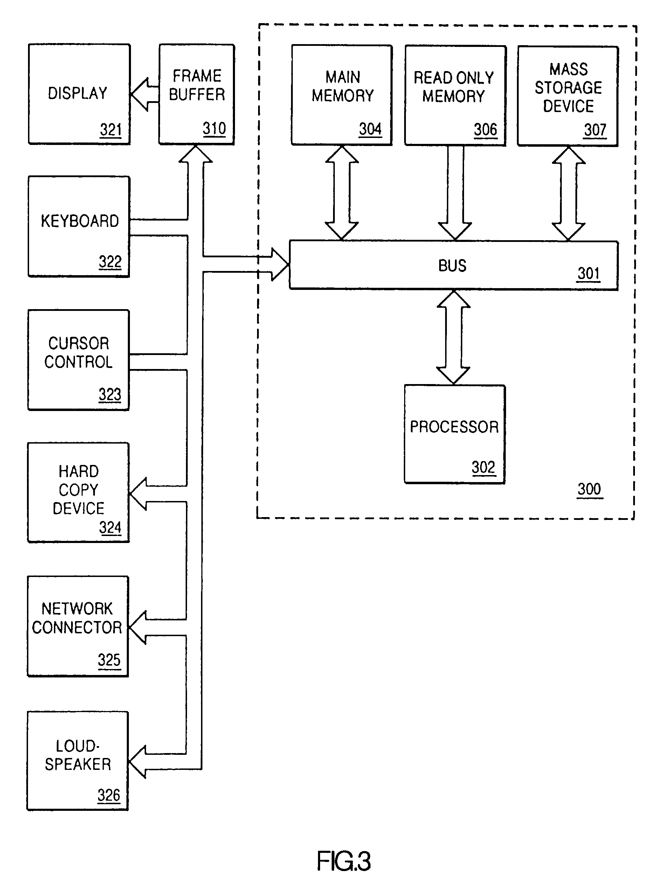

A computer system, such as a workstation, personal computer or other processing apparatus in which the client 100 or server 150 may be operative is illustrated in Figure 3. A workstation in which one implementation of the present invention may be practiced includes system 300. System 300 comprises a bus or other communication means 301 for communicating information, and a processing means 302 coupled with bus 301 for processing information. System 300 further comprises a random access memory (RAM) or other volatile storage device 304 (referred to as main memory), coupled to bus 301 for storing information and instructions to be executed by processor 302. Main memory 304 also may be used for storing temporary variables or other intermediate information during execution of instructions by processor 302. System 300 also comprises a read only memory (ROM) and/or other static storage device 306 coupled to bus 301 for storing static information and instructions for processor 302, and a data storage device 307 such as a magnetic disk or optical disk and its corresponding disk drive. Data storage device 307 is coupled to bus 301 for storing information and instructions. This may be used for storage of the digital image and related audio databases to be described here using commercially available software products.

System 300 may further be coupled to a display device 321, such as a cathode ray tube (CRT) or liquid crystal display (LCD) coupled to bus 301 for displaying information to a computer user. Displays on other type display devices will not limit the scope of the present invention. Such a display 321 may further be coupled to bus 301 via a frame buffer 310, which contains information such as a single or multiple frames or images for display upon display device 321. An alphanumeric input device 322, including alphanumeric and other keys, may also be coupled to bus 301 for communicating information and command selections to processor 302. An additional user input device is cursor control 323, such as a mouse, a trackball, stylus, or cursor direction keys, coupled to bus 301 for communicating direction information and command selections to processor 302, and for controlling cursor movement on display 321. Auditory output may be played on a loudspeaker **326** connected to system **300**.

Note, also, that any or all of the components of system 300 and associated hardware may be used in various embodiments, however, it can be appreciated that any configuration of the system may be used for various purposes according to the particular implementation.

In one embodiment, system 300 is one of the Sun Microsystems® brand family of workstations such as the SPARCstation brand workstation manufactured by Sun Microsystems® of Mountain View, California. Processor 302 may be one of the SPARC brand microprocessors manufactured by Sun Microsystems®, Inc. of Mountain View, California. (Sun Microsystems is a registered trademark of Sun Microsystems, Inc.)

Note that the various embodiments discussed herein will refer specifically to a series of routines which are generated in a high-level programming language (e.g., the C or C++ programming language) and compiled, linked, and then run as object code in system 300 during run-time, for example by the SPARCompiler available from SunS oft of Mountain View, California (SPARC and SPARCstation are trademarks of SPARC International, Inc, and are licensed exclusively to Sun Microsystems). These further are used in conjunction with the browser and server software available from Netscape, as described above, including the specification of the appearance of displays in HTML. It can be appreciated by one skilled in the art, however, that the following methods and apparatus may be implemented in special purpose hardware devices, such as discrete logic devices, large scale integrated circuits (LSI's), application-specific integrated circuits (ASIC's), or other specialized hardware. The description here has equal application to apparatus having similar function. For example, in a computer system without a loudspeaker **326**, the audio might be played through a regular telephone if the server **150** is connected to the public telephone network and the user has entered her telephone number on a form **230**.

### What is the Invention

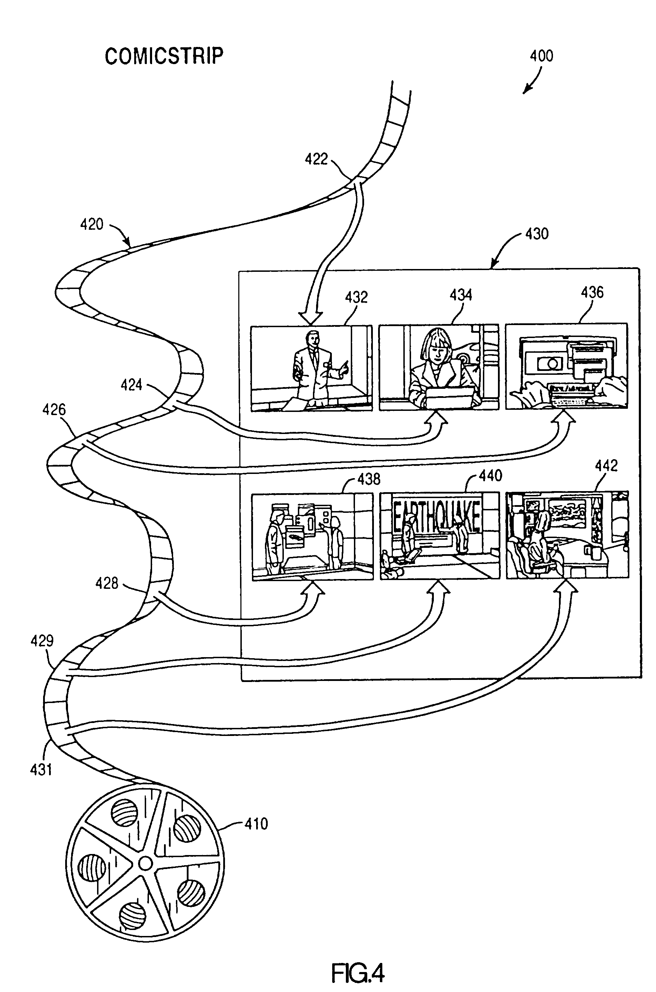

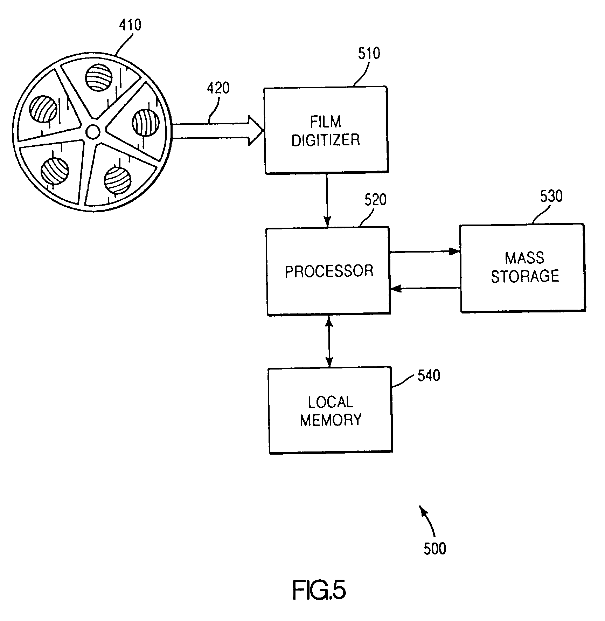

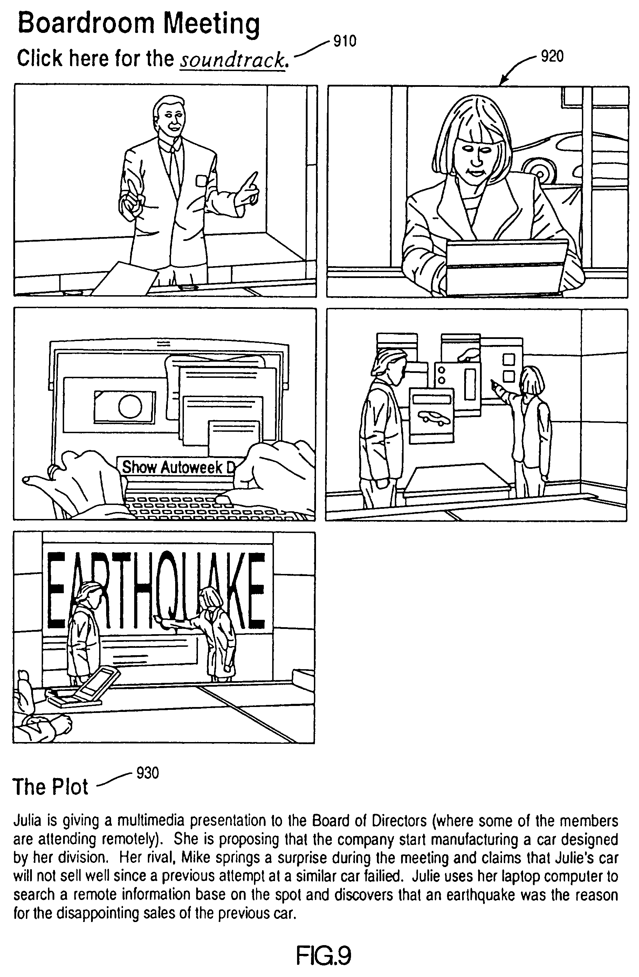

Referring now to **Fig. 4**, the concept of a movie or video "Comicstrip summary" is described **400**. Conceptually, a comicstrip **430** is a "window" or "poster" containing a limited number of still images which, generally in sequence, represent a summary of a larger movie or video work. For example, the comicstrip **430** depicted contains still images **432** through **442** which correspond to specific frames of the film **420**. That is frame **422** for example, corresponds to still image **432** on the comicstrip **430**, frame **424** corresponds to still image **434** and so on. In the preferred embodiment, the comicstrip **430** corresponds to a WWW browser window and the still images **432** through **442** would correspond to still images of such a size to reasonably fit on the browser window while being large enough to show reasonably sharp detail of the image. **Fig. 9** provides a sample of such a comicstrip created by the preferred embodiment. Returning to **Fig. 4** for a moment, it is apparent in the case depicted that there is no sound associated with the comics trip as shown. In the preferred embodiment, as illustrated in **Fig. 5** the physical film **420** from **Fig.4** is digitized **510** by processor **520** and stored in mass storage **530** by a program contained in local memory **540**. In alternative embodiments, the film **420** may be read by processor **520** without first storing the entire digitized film in mass storage **530** but rather storing only selected frames of the film in either mass storage **530** or local memory **540**. In the preferred embodiment the audio from the audio track of the film **420** is also captured by processor **520** and stored as a separate file which can be linked to the video image file.

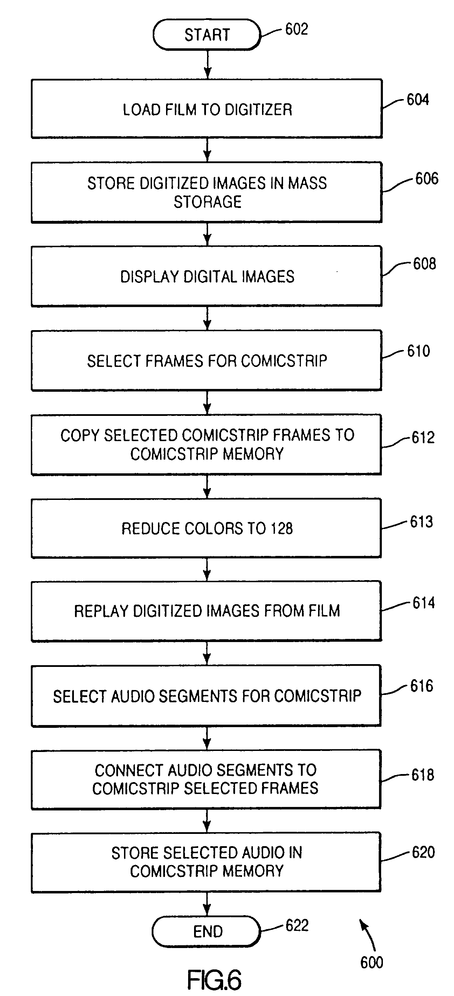

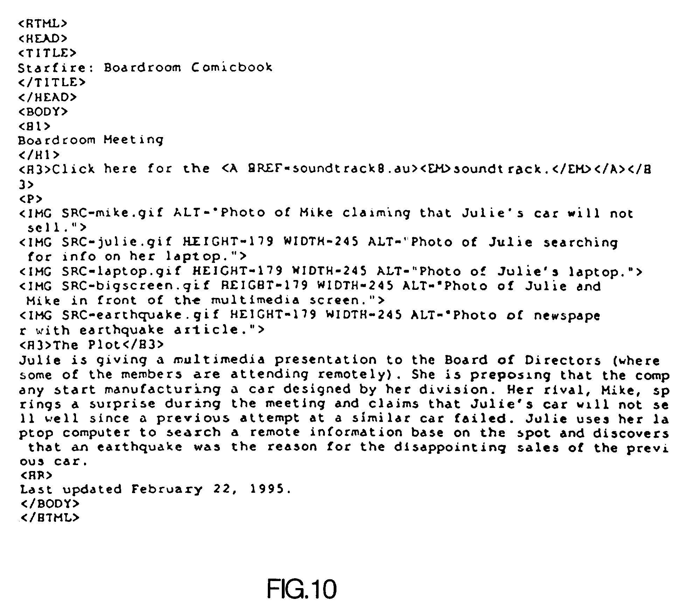

Turning now to **Fig. 6** this selection process **600** is described in more detail. To begin, the film is loaded to the film digitizer **604**. Commercially available equipment for reading the video or movie film and creating a digital file of the images, such as an Apple MacIntosh® Quadra 840 AV for example, can be used. (Note: Apple and Macintosh are registered trademarks of Apple Computer, Inc.). In the preferred embodiment the built in digitizer of an Apple MacIntosh Quadra 840 AV is used to create the digital image file. Typically the digitized images are stored in mass storage **606**. The digital images of the video or movie are now displayed using a commercially available viewer program **608** and the frames selected for the comicstrip **610**. In the preferred embodiment a VideoFusion 1.5.1 viewer from Video Fusion, Inc., Maumee, Ohio is used. Such viewers usually have a slow-motion function and a "frame-step" function which facilitates selecting the best frame image for the comicstrip. Most such commercial viewers also have a "save image" function which facilitates saving the selected image to a separate file **612**. In the preferred embodiment the frame images are further processed to reduce the number of colors used in the images to 128 **613**. In the preferred embodiment, Photoshop™⃝ 2.5.1 from Adobe® Systems, Inc. is used. (Adobe is a registered trademark and Photoshop is a trademark of Adobe Systems, Inc.). This is done by mapping the color values of the pixels in the selected image to an equivalent colormap containing only 128 colors. This process does not diminish the clarity of the images unnecessarily and yet further reduces the number of bytes of data necessary to represent an image, thus assisting in the speed-up of any subsequent transmission of these images. The original film audio, which was also captured during the digitizing process **604** is now replayed in order to select audio segments appropriate for the images selected for the comicstrip **614,616**. The audio file is compressed to 8 bit quality audio further reducing the number of bytes necessary to represent the audio and yet not reducing the audio quality beyond acceptable limits. The compressed audio segments selected are stored to a separate audio file and the address of this audio file connected to the comics trip **618.** In the preferred embodiment, this connection is done using the "html" script shown in **Fig. 10**. This "html" file may also be used to retain and connect a short text description of the plot of the story displayed in the comicstrip or a scene setting, or whatever description desired for this comicstrip. This is described in detail below.

### How to Use the Invention

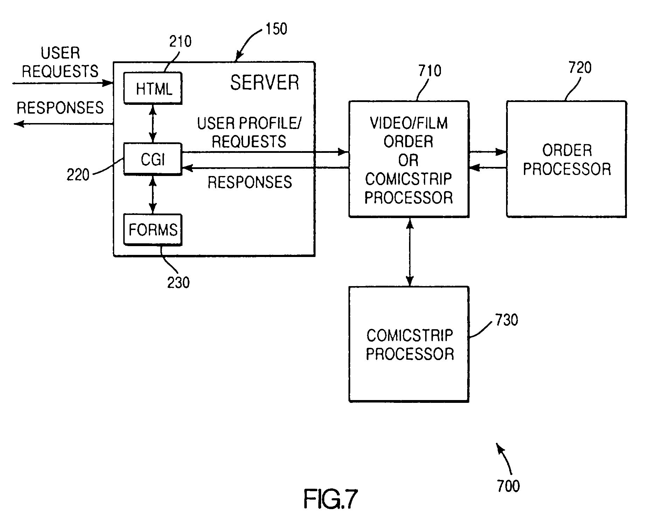

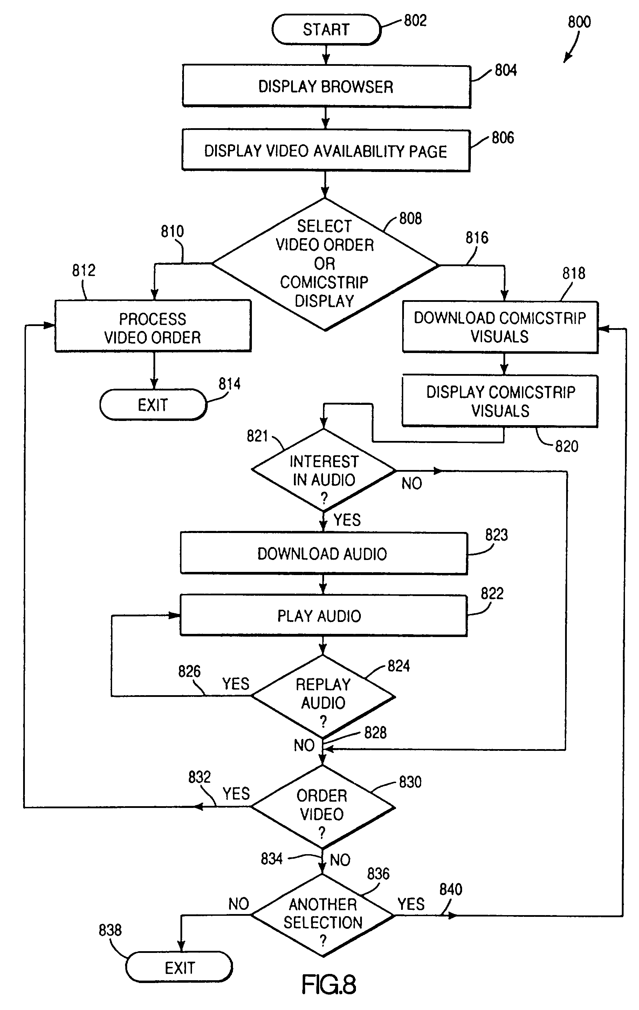

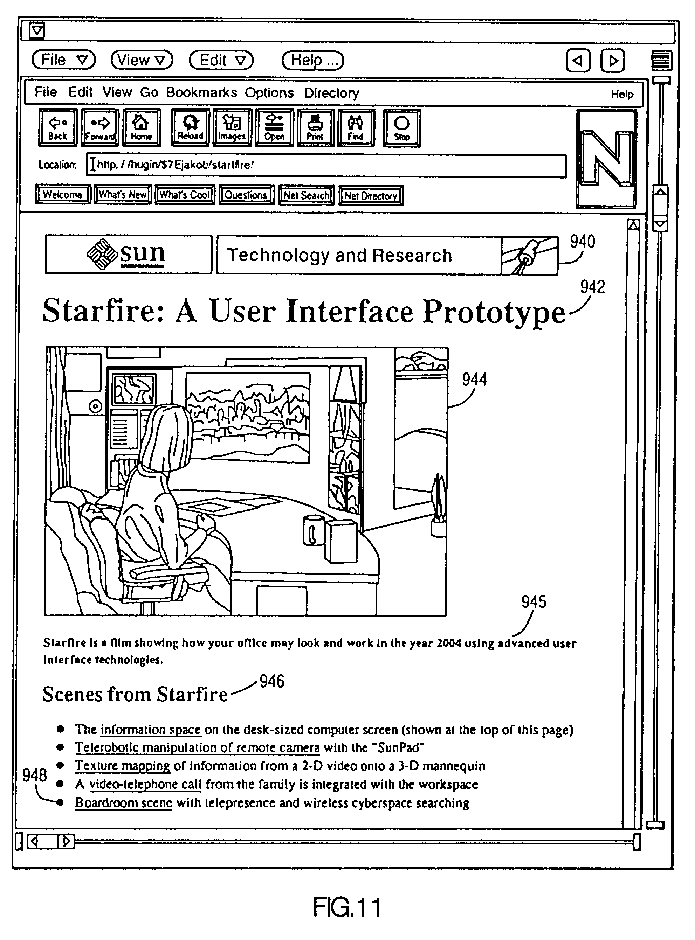

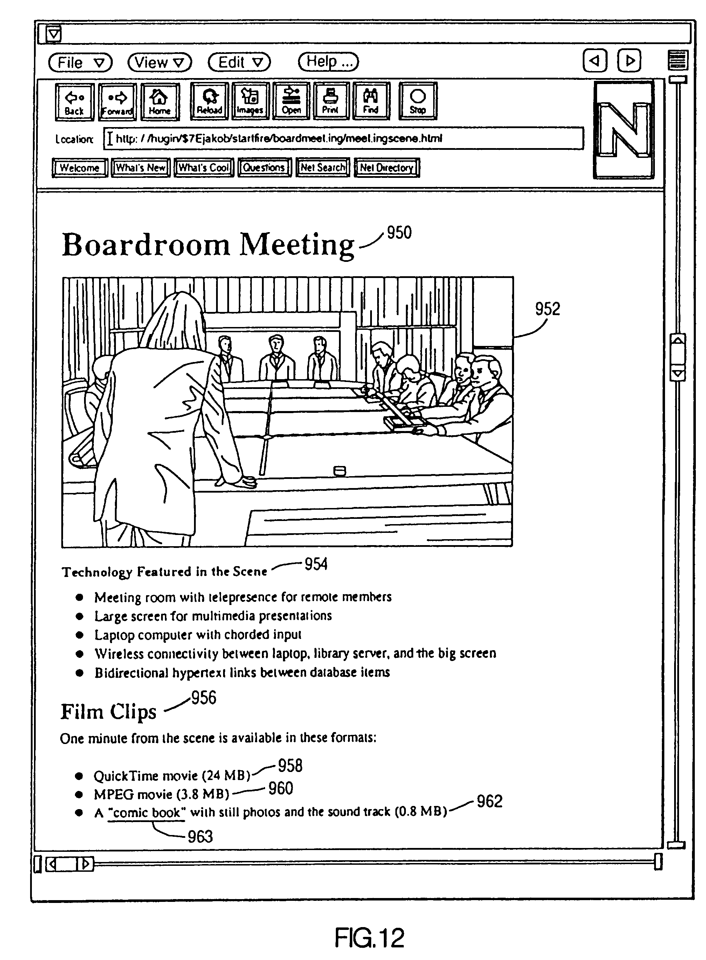

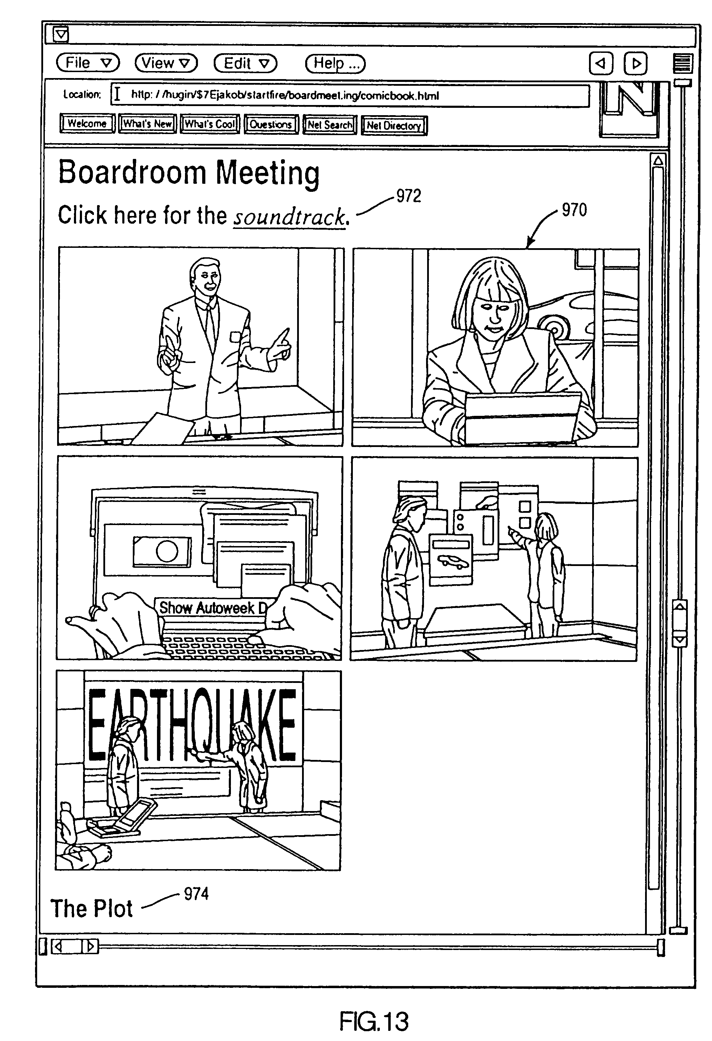

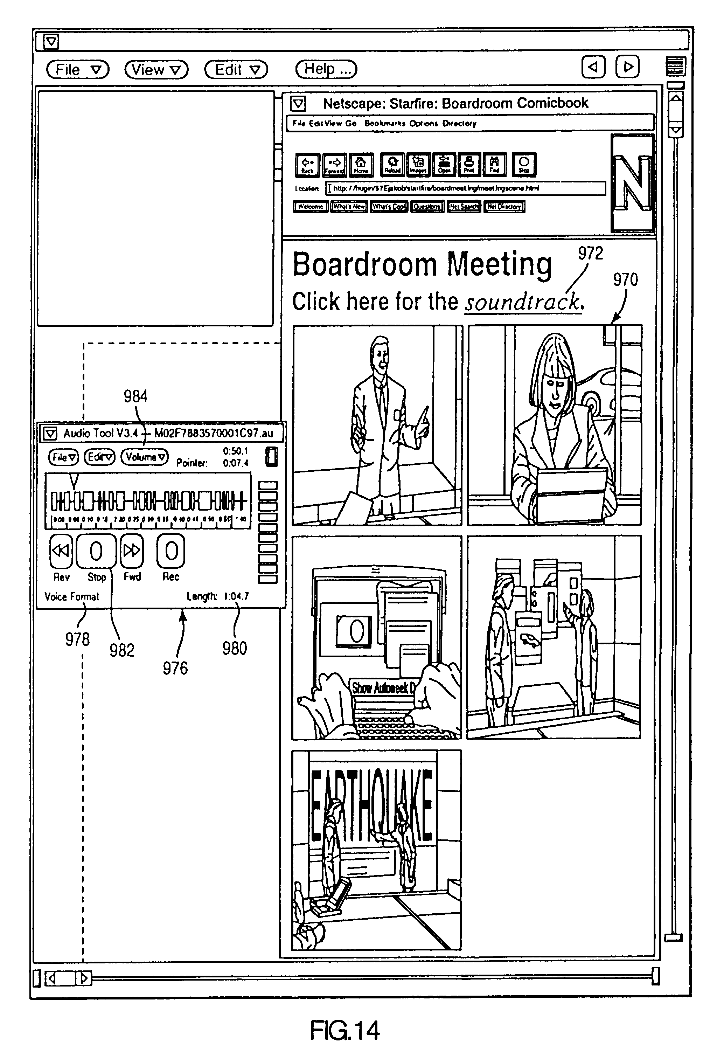

Having created a comicstrip with related audio file, how a user would access this mechanism using her browser is now described. **Fig. 7** illustrates the interaction between the server **150** and video/film order or comicstrip processor **710** program, which is operative under control of the CGI in the server **220**. Depending upon user input, requests are sent to the active application in the server, in this case the video/film order or comicstrip processor **710** program, which causes the application to perform certain functions. If the request is a command to order a copy of the movie/film/multimedia work, the request is passed by the video/film order or comics trip processor **710** program to the order processor **720**. If the request is a command to view the comicstrip summary for a multimedia work, the request is passed by the video/film order or comicstrip processor **710** program to the comics trip processor mechanism **730** for selection of the designated work and transmission to the requester. This process is described in more detail from the viewpoint of the user with reference to **Fig. 8.** The user begins the process by bringing up her browser **804** (see **Fig. 11** for a typical view of the Netscape browser which is used in the preferred embodiment). The "display video page" (which may be called by various names, such as shown in the example below) is brought up by the browser **806**. The user has the option of making a selection (this is described relative to an example below in **Figs. 11-14**) for ordering a copy of the desired multimedia work or requesting a comicstrip summary display of the work **808**. If the "order" selection is made **810** the system passes the order to the process video order process 812 and the task exits **814** displaying a reply "order process completed" on the browser. If the comicstrip display request was selected (see **962** in **Fig. 12**) **816** the system finds the selected comicstrip and related video files on the server according to the hypertext command related to the selected indicator on the browser page (**962** in **Fig. 12**) and downloads these files to the user's machine **818**. The browser displays the comicstrip **820**, as for example shown **920** in **Fig. 9** and **970** in **Figs.13 & 14**. Typically a plot summary **930** in **Fig. 9** is included with the comicstrip file for display on the browser with the comicstrip. Continuing in **Fig. 8** the user may now download and play the audio file **822** which accompanies the comics trip display file. This audio play activation is performed by clicking on the indicator ( **910** in **Fig. 9** or **972** in **Fig. 13**) on the comicstrip page. Typically the user can replay the audio **826** by merely clicking again on the "soundtrack" indicator (**910** in **Fig. 9**) or using the rewind and replay buttons on the audio tool (**982** in **Fig.14**). Normally the user now has the option of ordering **832** the multimedia work whose comics trip she just viewed or selecting another comics trip to view **836**, **840**, or exiting the browser **838**.

**Fig. 10** displays the "html" script used in the preferred embodiment to attach the audio file and the plot summary to the comicstrip display window. Those skilled in the art will recognize that various other scripts and configurations could be used to accomplish these purposes.

### An Example

An example of how the present invention would be used is now described with reference to **Figures 11-14**. **Fig.11** depicts a typical window using the WWW browser from Netscape. The window shown in Fig.11 is a window that would be in the "Technology & Research" section **940** of the "Home Page" of Sun Microsystems, Inc. which is found on the WWW at URL=http://www.sun.com. This window shown in **Fig.11** is not yet in the Sun External Home Page but will be in the future. In this exemplary page (**Fig.11**) an ad for the film "Starfire" **942** is shown. A picture (visual image) **944** of one of the scenes is shown with text **945** describing the film, and some text identifying certain other scenes from the film **946**. The scenes identified typically have hypertext pointers associated with each, as for example the "Boardroom" **948** scene indicator. Clicking the computer display cursor on this hypertext pointer for the Boardroom scene **948** causes a new window to appear on the browser similar to **Fig. 12**. **Fig. 12** is like the previous window in that the title **950**, visual image **952** and other text **954** and **956** are displayed. In this case the text "Film clips" **956** lists other clips that the user can display such as "Quick Time movie (24 MB)" **958**, "MPEG movie (3.8 MB)" **960** and "A "comic book" with still photos and the sound track (0.8 MB)" **962**. It is this latter item which is the invention disclosed in this application. Clicking the computer display cursor on this hypertext pointer **963** for the ""comic book" with still photos and the sound track (0.8 MB)" **962** causes a new window to appear on the browser similar to **Fig. 13**. In **Fig. 13** a sample comicstrip of the type disclosed for the present invention **970** is displayed which was produced from the film "Starfire". A hypertext pointer **972** indicates where the user should click to get the related audio file and the additional text which might go with the comicstrip **970** is displayed on the bottom of the page (not visible in this figure) **974**. Clicking the computer display cursor on this hypertext pointer **972** for the "soundtrack" **972** causes a new window to appear on the browser similar to **Fig. 14**. Actually the window shown in **Fig. 13** containing the comics trip (**970** in **Fig. 13**) remains on the computer display screen and a small window **976** appears which displays the controls of the audiotool which the user may have on her computer system. In this example, the audiotool contained in the Sun Microsystems Solaris operating environment is depicted **976**. At the same time as the display appears the audiotool begins to play the audio from the audio file that was related to the comics trip. In this audiotool display is shown data indicating the audio is "voice format" **978**, of length of time 1:04.7 minutes **980**. Additionally controls to adjust the volume of the audio **984** and to "stop play", "reverse or conceptually rewind the audio" and "fast forward" **982** are shown. In this example there are no hypertext links shown with which the user could order a copy of the film, however in the preferred embodiment it is envisioned that such a choice would be made available to the user.

While the present invention has been described in terms of a comicstrip summary of a larger multimedia work, the problem of minimizing the user wait time for a response on the WWW network is one which is present when any lengthy work or document is requested for downloading. Accordingly the process disclosed herein may be adapted to various other similar situations. For example, allowing users to judge a film or television show before ordering it through a pay-per-view service, helping judges in competitions like the Academy Awards to quickly get an overview of a large number of audiovisual works before choosing which ones to nominate or consider more closely for the award, allowing expatriates to keep up with the evening news or other television shows from their home country, allowing activists to bring their case to a world audience where transmitting the full video of the case would take up so much bandwidth as to make its transmission impossible, allowing grandparents and other remotely located family members to get an impression of a birthday party or similar events that have been captured on home video. Those skilled in the art will recognize other examples of how such a comicstrip summary of a larger multimedia work would be beneficially used, and accordingly this list of exemplary uses is in no way to be considered exhaustive or otherwise limiting.

In addition, while the present invention has been described with reference to **Figures 1** through **11**, it will be appreciated that the figures are for illustration only, and do not limit the spirit and scope of the invention. By necessity, the specification describes, for example, screen images having certain attributes and features, however, it will be appreciated that the invention is not limited by the specific examples provided herein.

## Claims

1. A computer system having a central processing unit (CPU) and random access memory (RAM) coupled to said CPU, for use in providing a client on a network with a comicstrip summary ofa much larger multimedia work, which multimedia work would require significant time and network bandwidth to transmit to the client, said computer system comprising:
a server system configured to receive and store a digitized version of a multimedia work;
an image selection mechanism coupled to said server system, said image selection mechanism configured to permit selection of a plurality of images from said multimedia work; and
a comicstrip processor coupled to said server system, said comicstrip processor configured to create a comicstrip file for said multimedia work using said plurality of images from said multimedia work, whereby said comics trip file can be transmitted over the network to said client in a substantially reduced amount of time compared with said multimedia work.

2. The computer system of claim 1 further comprising an audio selection mechanism coupled to said server system, said audio selection mechanism configured to permit a selection of audio from said multimedia work independent of said plurality of images selected, and to create a file of said selected audio and to relate said file of said selected audio to said comicstrip file.

3. The computer system of claim 2 wherein said file of said selected audio is compressed to 8 bit audio format to further reduce amount of data and related transmission time for transmitting said file of said selected audio to said client.

4. The computer system of claim 1 wherein said plurality of images from said multimedia work in said comicstrip file are modified by reducing number of colors used to represent color of a pixel in said images to 128 colors thereby further reducing amount of data and related transmission time for transmitting said comicstrip file of said selected images to said client.

5. The computer system of claim 2 further comprising a request processor in said server system, said request processor configured to transmit to a client said comicstrip and related audio file.

6. The computer system of claim 5 wherein said client comprises a display processor configured to make requests to said server system and to display said comicstrip to a user after said comics trip has been transmitted to said client by said server system.

7. The computer system of claim 6 wherein said client further comprises a selection mechanism configured to permit said user to play said related audio file while displaying said comicstrip.

8. The computer system of claim 7 wherein said client comprises an HTTP browser and said server system comprises an HTTP server application program.

9. A computer implemented comics trip creation system for providing a client on a network with a comicstrip summary of a much larger multimedia work, which multimedia work would require significant time and network bandwidth to be transmitted to said client, the comicstrip creation system comprising:
an image selection mechanism configured to permit selection of a plurality of images from a digitized version of a multimedia work;
a comicstrip processor coupled to said image selection mechanism, said comics trip processor configured to create a comicstrip file for said multimedia work using said plurality of images from said multimedia work; and
an audio selection mechanism coupled to said comicstrip processor, said audio selection mechanism configured to permit a selection of audio from said multimedia work independent of said plurality of images selected, and to create a file of said selected audio and to relate said file of said selected audio to said comicstrip file.

10. The computer implemented comicstrip creation system of claim 9 further comprising a request processor configured to transmit to a client said comicstrip file and related audio file.

11. The computer implemented comicstrip creation system of claim 9 wherein said plurality of images from said multimedia work are modified by reducing number of colors used for pixels in said images to 128 colors, thereby reducing number of bytes of data needed to represent images in said comicstrip file.

12. The computer implemented comicstrip creation system of claim 9 wherein said selection of audio from said multimedia work is compressed and stored in 8 bit quality form, thereby reducing number of bytes of data needed to represent audio in said audio file.

13. A computer implemented method for constructing a comicstrip of images from a multimedia work, said method comprising the steps of:
providing a first device to use in storing a digitized version of a multimedia work in a memory coupled to said computer;
providing a second device to use in selecting a plurality of images from said multimedia work;
providing a third device to use in creating a comicstrip file for said multimedia work which uses said plurality of images from said multimedia work; and
providing a fourth device to use in storing said comicstrip file in said memory.

14. The method of claim 13 further comprising steps of providing a mechanism to use in selecting audio from said multimedia work independent of said plurality of images selected, and providing a mechanism to use in creating a file of said selected audio and relating said file of said selected audio to said comicstrip.

15. The method of claim 14 further comprising a step of providing a mechanism to be used in transmitting to a client said comicstrip and related audio file.

16. The method of claim 15 further comprising a step of providing a device to be used in displaying said comicstrip to a user after said comicstrip has been transmitted to said client.

17. The method of claim 16 further comprising a step of providing an audio playback tool to use in playing said related audio file while displaying said comicstrip.

18. The method of claim 17 wherein said client comprises an HTTP browser.

19. The method of claim 13 wherein said plurality of images from said multimedia work are modified by reducing a number of colors used to represent color in pixels in said images to 128 colors.

20. The method of claim 13 wherein said selection of audio from said multimedia work is compressed and stored in 8 bit quality form.

21. A method of providing a client on a computer network with a comicstrip summary of a much larger multimedia work wherein the comicstrip summary has an audio filed related to the comicstrip summary and wherein the comics trip summary and related audio file can be transmitted to the client in a fraction of the time and using a fraction of the bandwidth required by the larger multimedia work, said method comprising the steps of:
selecting a limited number of images from the multimedia work by means of a computer mechanism;
storing said limited number of images from the multimedia work in a computer memory;
selecting a limited amount of audio from the multimedia work by use of a computer mechanism;
relating the audio file to the comicstrip file; and
transmitting to the client over the network the comicstrip file and related audio file
whereby the transmission of the comicstrip file and related audio file takes a fraction of the time and uses a fraction of the bandwidth that would be used by the larger multimedia work.

22. The method of claim 21 comprising the additional step of limiting the number of colors used to represent color in pixels of the selected limited number of images from the multimedia work to a level less than 129 colors thereby reducing the bytes of data required to store said limited number of images from the multimedia work.

23. The method of claim 21 comprising the additional steps of limiting the bit representation of the audio to a quality level less than 9 bits, thereby limiting the bytes of data required to store said limited amount of audio, and storing said limited amount of audio which has been reduced to 8 bit quality coding in an audio file in computer memory.

24. The method of claim 21 wherein the audio file is related to the comicstrip file using an HTML script.

25. The method of claim 21 wherein a selected amount of text is related to the comicstrip file.

26. The method of claim 25 wherein the selected amount of text is related to the comicstrip file using an HTML script.

27. A browser window display to use in a computer display device comprising:
a comicstrip summary of a larger multimedia work comprising a limited number of images taken from the larger multimedia work wherein the limited number of images have been limited to color representation of 128 or less colors;
a hypertext pointer to an audio clip containing a selected portion of audio from said larger multimedia work wherein the selected portion of audio is coded in 8 bit audio and is accessible by clicking on said hypertext pointer; and
a text portion to use in describing a plot summary of said story represented by said comicstrip summary or to use with other descriptive text data
wherein said comics trip summary, said audio clip and said text portion are downloaded to said browser window display from a remote computer device in a fraction of time it would take to download said multimedia work to the computer device containing the browser window.
